# EUROPÄISCHE PATENTSCHRIFT

(11) **EP 1 845 012 B1**
(45) Veröffentlichungstag und Bekanntmachung des Hinweises auf die Patenterteilung: **15.04.2009**
(21) Anmeldenummer: 07001696.9
(22) Anmeldetag: 26.01.2007
(51) Int. Cl.: B62D 25/02, B62D 25/24, B62D 35/00, B62D 37/02

(54) **Schwellerelement**
Door sill element
Elément de seuil

(30) Priorität: 15.04.2006 DE 102006017781
(43) Veröffentlichungstag der Anmeldung: 17.10.2007
(73) Patentinhaber: Dr. Ing. h.c. F. Porsche Aktiengesellschaft, 70435 Stuttgart (DE)
(72) Erfinder: Palmer, Eberhard, 71665 Vaihingen/Enz (DE); Bauernfeind, Christoph, 71665 Vaihingen/Enz (DE)

(56) Entgegenhaltungen:
- DE-A1- 3 246 767
- DE-A1- 4 217 513
- DE-A1- 10 257 662
- DE-A1- 10 340 154
- DE-C1- 4 322 433
- DE-U1- 8 337 530
- DE-U1- 29 825 006
- JP-A- 2006 298 200
- US-A1- 2003 094 835

## Beschreibung

Die Erfindung bezieht sich auf ein Schwellerelement nach dem Oberbegriff des Anspruchs 1.

Aus der DE 202 15 245 U1 ist eine Schwellerverkleidung bekannt, die über Clipse mit einem Fahrzeugschweller verbindbar ist. Aus der DE 32 46 767 A1, die den Oberbegriff des Anspruchs 1 bildet, ist eine vom Fahrzeugschweller vorstehende Verkleidung bekannt, welche eine Durchtrittsöffnung für einen Tragzapfen eines Wagenhebers aufweiset. Diese Durchtrittsöffnung ist durch einen einseitig befestigten, innen liegenden elastischen Deckel selbsttätig verschließbar. Die Verkleidung ist der unteren Seite des Fahrzeugs zugerichtet und mit einem ziehharmonikaartigem Absatz versehen, welcher eine Sollbiegestellung ausbildet. Des Weiteren ist aus der DE 42 17 513 A1 ein System zum Befestigen eines Keders an einem Panel bekannt, wobei die Befestigung über Einrastbereiche, Rastnasen und/oder Klemmverbindungen erfolgt.

Die Aufgabe der Erfindung besteht darin, ein Schwellerelement zu schaffen, dass eine Beschädigung eines aufbauseitigen Fahrzeugschwellers durch einen Wagenheber in Arbeitsstellung vermeidet und gleichzeitig so ausgestaltet ist, dass ein Luftleitelement am Schweller gebildet wird.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass durch das Aufsetzen eines Formteils, insbesondere aus Kunststoff auf den Schweller des Fahrzeugaufbaus ein am Fahrzeug angesetzter Wagenheber keine Beschädigungen am Schweller des Fahrzeugaufbaus hervorrufen kann. Dies wird insbesondere dadurch erreicht, indem das Formteil am hinteren Ende mit einer durchgehenden Ausnehmung für einen Wagenheberspindel ausgebildet ist und die Ausnehmung bei Nichtgebrauch über einen Deckel verschlossen wird.

Des Weiteren wird ein aerodynamischer Effekt durch das Formteil erzielt, wobei die Außenfläche des Formteils mit eingesetztem Deckel eine aerodynamische Luftleitfläche bildet, die in einer vertikalen und in einer horizontalen Ebene nach außen ausgerundet ausgebildet ist. Hierbei ist ein vorderes Ende des Formteils unmittelbar anliegend am Fahrzeugschweller angeordnet und das entgegengesetzt angeordnete hintere Ende des Formteils ist vom Fahrzeugschweller bogenförmig wegerstreckend ausgeführt. Eine ankommende Luftströmung im Fahrbetrieb kann somit durch diese Formgebung verwirbelungsfrei und anliegend am Fahrzeug abströmen.

Eine Befestigung des Formteils am Fahrzeugschweller erfolgt über einen Halter, der am Fahrzeugaufbau befestigt ist und welcher aus einer länglichen Winkelschiene mit Einrastbereichen besteht, die korrespondierend zu hintergreifenden Rastnasen des Formteils angeordnet sind. Des Weiteren ist vorgesehen, dass das Formteil auf einem längsverlaufenden horizontalen Schenkel der Winkelschiene in die Einrastbereiche einsetzbar und durch Längsverschiebung - entgegen der Fahrtrichtung - in weitere Einrastbereiche eines vertikal verlaufenden Schenkels der Winkelschiene einrastbar ist. Dieser vertikale Schenkel ist - in Fahrtrichtung gesehen - dem vorderen Ende des Formteils zugerichtet.

Durch diese besondere Ausbildung der Winkelschiene ist eine vereinfachte Montageweise des Formteils am Fahrzeugschweller möglich, in der Weise, dass das Formteil mit seinen Rastnasen in einfacher Weise auf die Schiene aufgesetzt und dann nach unten in Richtung Fahrzeugaufstandsfläche gedrückt wird und danach entgegen der Fahrtrichtung in die Rastungen verschoben werden kann. Als Endanschlag dienen dann die Rastbereiche am vertikalen Schenkel der Winkelschiene bzw. die Rastnasen am Formteil.

Damit ein Abfallen des Formteils bei einem Stoß entgegen der Fahrtrichtung auf dieses nicht erfolgen kann, ist der vertikale Schenkel - in Fahrtrichtung gesehen - vorzugsweise am vorderen Ende der Winkelschiene angeordnet. Ein fester Sitz des Deckels am Formteil ist gewährleistet, wenn der Deckel über eine Klemmverbindung und Führungsbahnen am Formteil sowie korrespondierend zu diesem angeordneten Führungsstegen am Deckel in das Formteil eingeführt und in Lage gehalten wird. Die Klemmverbindung besteht vorzugsweise aus Federklammern oder dergleichen Mitteln, die in Öffnungen des Formteils einrastend eingreifen.

Zum problemlosen Einsetzen des Deckels in das Formteil ist an jeder Seitenwandung der durchgeführten Ausnehmung im Formteil eine bogenförmig verlaufende Führungsbahn vorgesehen, der eine gradlinig verlaufende weitere Führungsbahn gegenübersteht, welche im unteren Endbereich parallel verlaufend zum geradlinig verlaufenden unteren Ende der bogenförmig verlaufenden Führungsbahn ausgeführt ist. Hierdurch wird die Einfädelung des Deckels in die vertikale Ausnehmung vereinfacht und gleichzeitig wird über die Stege ein weiterer fester Halt am Formteil zusätzlich erzielt.

Damit das Formteil und der Deckel vor Steinschlagschäden geschützt wird und ein dichter bzw. spaltfreier Anschluss an den mit einer rauen Oberfläche versehenen Blechschweller erfolgen kann, ist das aus einem harten Material bestehende Formteil mit Deckel von einer weichen Schutzschicht umgeben. Die Überstände an den Kanten des Formteils und des Deckels können sich somit elastisch an den Schweller bzw. an das Formteil anlegen.

Ein Ausführungsbeispiel der Erfindung ist in den Zeichnungen dargestellt und wird im Folgenden näher beschrieben.

Es zeigen
- Fig. 1: eine Ansicht auf ein Schwellerelement mit eingesetztem Deckel von der Fahrzeugaußenseite her gesehen,
- Fig. 2: eine Ansicht gem. Fig. 1 in Pfeilrichtung Z gesehen,
- Fig. 3: eine Ansicht auf das montierte Formelement,
- Fig. 4: eine Ansicht auf die am Fahrzeugschweller befestigte Winkelleiste,
- Fig. 5: eine schaubildliche Darstellung auf die Innenseite des Formelements mit der eingelagerten Winkelschiene
- Fig. 6: eine Ansicht auf eine Innenfläche der Formschale mit eingesetztem Deckel
- Fig. 7: eine schaubildliche Darstellung der Formschale mit dargestellten Führungsbahnen an einer Seitenwand
- Fig. 8: eine schaubildliche Innenansicht des Deckels mit Führungsstegen und Federklammern und
- Fig. 9: einen Horizontalschnitt durch das Formelement mit eingesetztem Deckel sowie Führungsstegen am Deckel und Führungsbahnen am Formelement mit eingesetztem Deckel sowie Führungsstegen am Deckel und Führungsbahnen am Formelement.

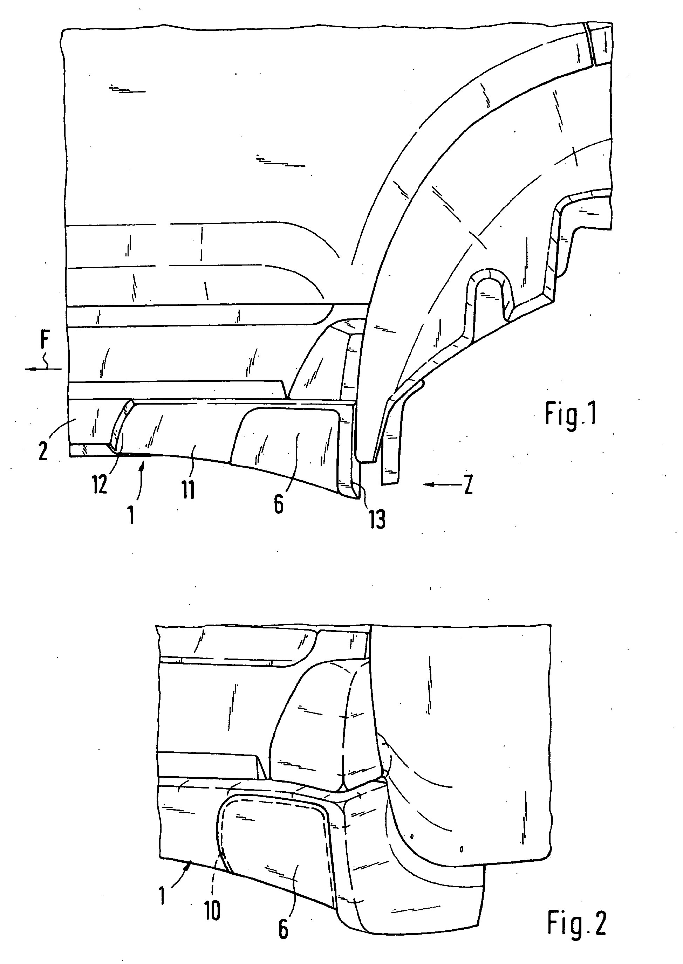

Wie in Fig. 1 ausschnittsweise dargestellt, ist ein Formteil 1 an einem Fahrzeugschweller 2 eines Fahrzeugaufbaus über eine längliche Winkelschiene 3 mit dem Fahrzeugaufbau verbunden. Die Winkelschiene 3 ist hierzu außenseitig am Schweller 2 beispielsweise über Schrauben 15, 16 befestigt. Eine Verbindung der Winkelschiene 3 mit dem Formteil 1 erfolgt mittels einer Klemm- oder Rastverbindung, gebildet durch Einrastbereiche 4, 5 und Rastnasen 20. Im Formteil 1 ist zur Abdeckung und Freigabe einer durchgehenden Ausnehmung für eine Wagenheberspindel ein Deckel 6 über Federklammern 22 und über Führungs- bzw. Haltemittel 8, 9 in Form von Führungsstegen 24 und Führungsbahnen 25, 26 gehalten.

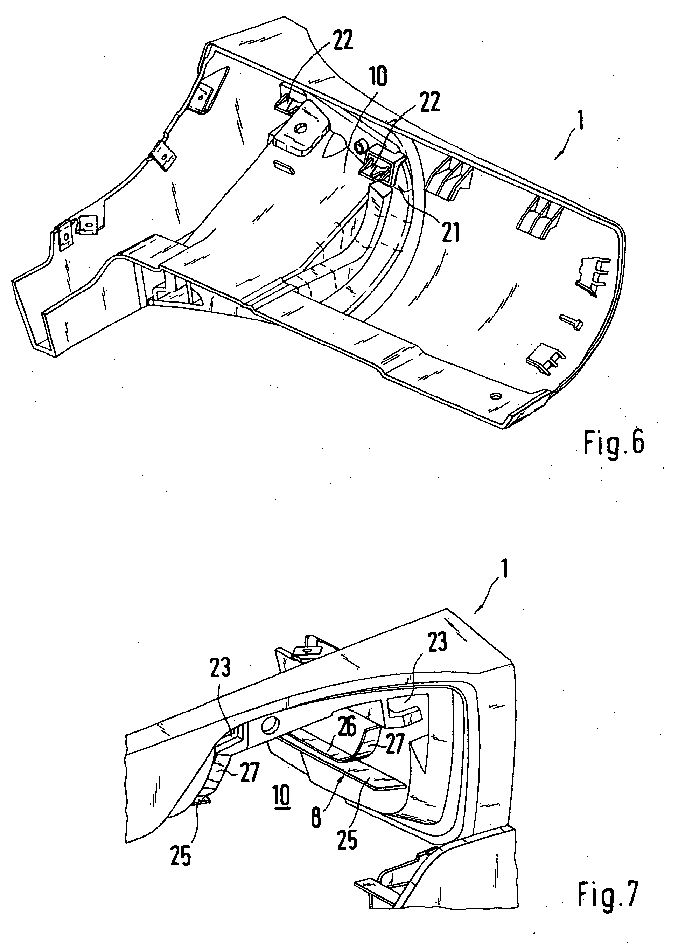

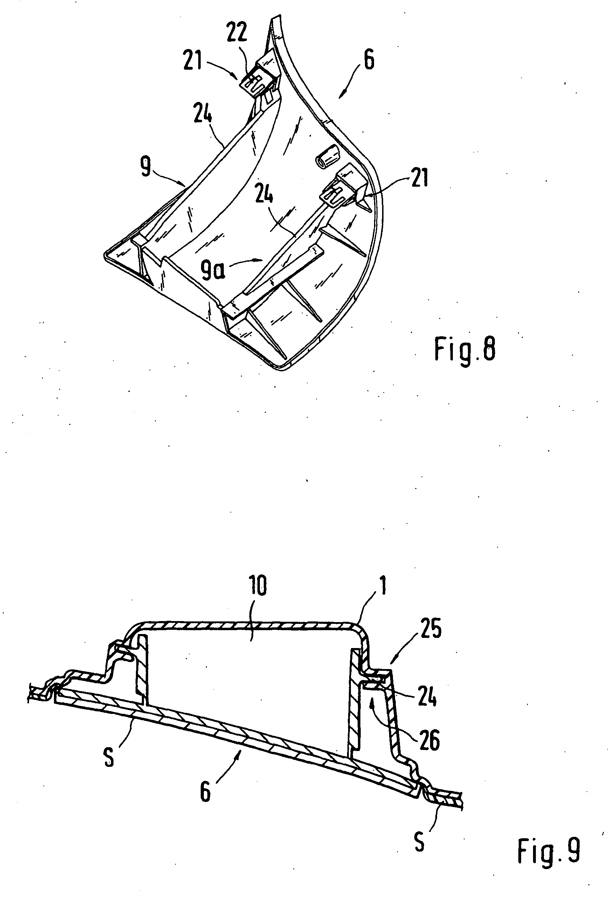

Die von oben nach unten durchgehende Ausnehmung 10 ist in den Fig. 7 und 9 näher gezeigt und liegt hinter dem Deckel 6 und ist zur Durchführung der Spindel des Wagenhebers vorgesehen, damit dieser in einer Arbeitsstellung, bei der die Fahrzeugaufnahme unterhalb des Fahrzeugbodens vorgesehen ist, keine Beschädigung hervorruft.

Das Formteil 1 weist bei dem Ausführungsbeispiel am hinteren Ende 13 die durchgehende Ausnehmung 10 auf, welche über den Deckel 6 abdeckbar ist. In dieser Stellung bildet die Außenfläche 11 des Formteils 1 eine aerodynamische Luftleitfläche, die in einer vertikalen und horizontalen Ebene nach außen ausgerundet ausgeführt ist.

Insbesondere ist das Formteil 1 in der Weise am Fahrzeugschweller 2 befestigt, dass ein vorderes Ende 12 - in Bezug auf die Fahrtrichtung F - unmittelbar am Fahrzeugschweller 2 anliegt und das sich anschließende hintere Ende 13 sich vom Fahrzeugschweller 2 bogenförmig wegerstreckt.

Eine Befestigung des Formteils 1 am Fahrzeugschweller 2 erfolgt über die mit dem Fahrzeugaufbau bzw. dem Schweller 2 verbundene längliche Winkelschiene 3. Diese ist über Schraubmittel 15, 16 am Schweller 2 befestigt. Die Winkelschiene 3 umfasst einen horizontalen Schenkel 3a und einen anschließenden vertikalen Schenkel 3b und in beiden Schenkeln 3a und 3b sind Einrastbereiche 4, 5 für Rastnasen 20 des Formteils 1 vorgesehen. Die Einrastbereiche 4, 5 werden beispielsweise an der Winkelschiene 3 durch Ausformungen am Rand dieser Winkelschiene 3 gebildet. Die Rastnasen 20 bestehen aus am Formteil 1 angeformte Haken, welche den Rand bzw. die Einrastbereiche 4, 5 übergreifen.

Der Deckel 6 wird einerseits über eine Klemmverbindung 21, 22 und andererseits über die Führungs- und Haltemittel 8, 9 im Formteil 1 gehalten. Die Führungsmittel 8 umfassen im Wesentlichen Führungsbahnen 25, 26 am Formteil 1 und hierzu die korrespondierenden Führungsstege 24 am Deckel 6 im Ausschnitt des Formteils 1. Die Klemmverbindung 21 besteht beispielsweise aus Federklammern 22, welche auf vorspringende Nasen des Deckels 6 angeordnet sind, die in Öffnungen 23 des Formteils 1 eingeführt werden. Das Formteil 1 wird darüber hinaus noch am Radhaus mittels Schraubmittel befestigt.

Damit ein einfaches Einsetzen des Deckels 6 in das Formteil 1 möglich ist, ist die eine Führungsbahn 26 mit einem Einführungsbogen 27 versehen. Dieser Führungsbahn 26, 27 steht eine weitere Führungsbahn 25 gegenüber, die im unteren Bereich parallel und geradlinig zur Führungsbahn 26 verläuft. Wie in Fig. 9 zu erkennen ist, liegen bei eingesetztem Deckel 6 die Führungsstege 24 des Deckels 6 zwischen den Führungsbahnen 25, 26 des Formteils 1 eingeklemmt.

Das Formelement 1 sowie der Deckel 1 bestehen aus einem harten Kunststoffmaterial und sind von außen von einer elastischen Schicht abgedeckt, die sich über die Kanten des Formteils 1 hinaus erstrecken und quasi anliegend zum Schweller 2 elastische Lippen ergeben bzw. sich an die Schwelleroberfläche anschmiegen. Ebenfalls gilt dies auch für den Deckel 6, der sich in die Aufnahmeöffnung des Formteils 1 einschmiegt.

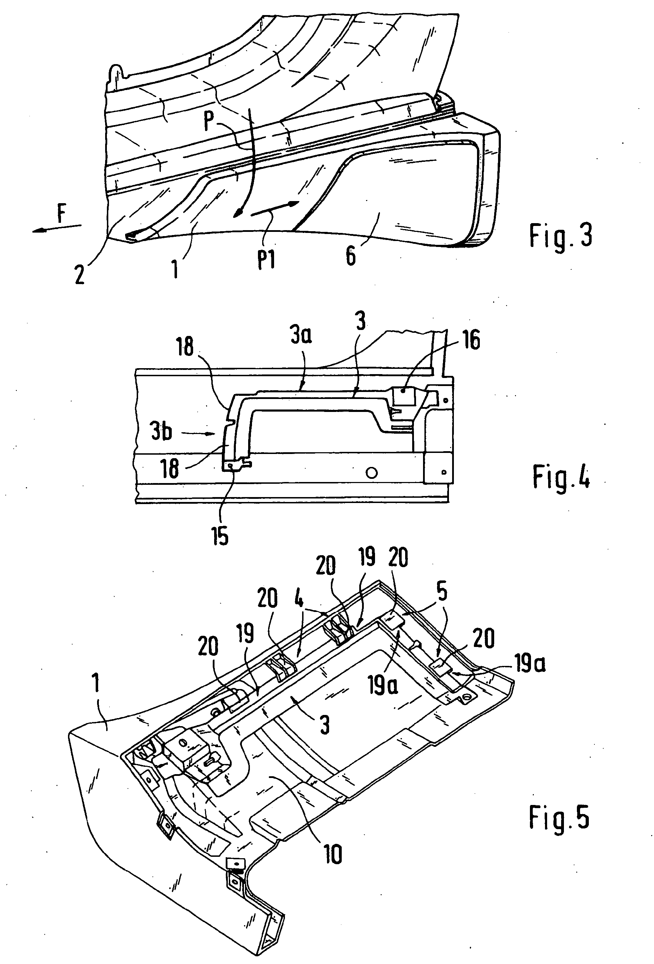

Die Montage des Formteils 1 auf die Winkelschiene 3 erfolgt in der Weise, dass zuerst das Formteil 1 mit den Rastnasen 20 auf den horizontalen Rand bzw. in die Rastbereiche 4 der Winkelschiene 3 in Pfeilrichtung P gesetzt wird und dann wird das Formteil 1 in Pfeilrichtung P1 entgegen der Fahrtrichtung F in die Rastnasen 20 bzw. in die Rastbereiche 5 geschoben, wie in Fig. 3 näher dargestellt ist.

## Patentansprüche

1. Schwellerelement mit einem am Schweller (2) eines Fahrzeugaufbaus verbindbaren Formteil (1), welches eine äußere Abdeckung zu dem Schweller (2) bildet und eine durchgehende Ausnehmung (10) für eine Wagenheberspindel aufweist, wobei die Ausnehmung (10) über einen Deckel (6) verschließbar ist, **dadurch gekennzeichnet, dass** das Formteil (1) am Fahrzeugschweller (2) über einen Halter am Fahrzeugaufbau befestigbar ist, der aus einer länglichen Winkelschiene (3) mit mehreren Einrastbereichen (4, 5) besteht, die korrespondierend zu hintergreifenden Rastnasen (20) des Formteils (1) angeordnet sind, und dass mit dem Formteil (1) der Deckel (6) lösbar verbunden ist, welcher über Klemmverbindungen (21) und Führungsbahnen (25, 26) im Formteil (1) sowie korrespondierend zu diesen angeordneten Führungsstegen (24) am Deckel (6) in das Formteil (1) von außen derart einführbar und in Lage gehalten ist, dass die Außenfläche (11) des Formteils (1) mit dem eingesetzten Deckel (6) eine aerodynamische Luftleitfläche bildet, die in einer vertikalen Ebene und in einer horizontalen Ebene nach außen hin ausgerundet ausgebildet ist.

2. Schwellerelement nach Anspruch 1, **dadurch gekennzeichnet, dass** das Formteil (1) auf einem längs verlaufenden Schenkel (3a) der Winkelschiene (3) in Pfeilrichtung (P) in die Einrastbereiche (4) einsetzbar und durch Längsverschiebung in Pfeilrichtung (P1) - entgegen der Fahrtrichtung (F) - in die weiteren Einrastbereiche (5) eines vertikal verlaufenden Schenkels (3b) der Winkelschiene (3) einrastbar ist und der vertikale Schenkel (3b) - in Fahrtrichtung (F) gesehen - dem vorderen Ende (12) des Formteils (1) zugerichtet ist.

3. Schwellerelement nach den Ansprüchen 1 oder 2, **dadurch gekennzeichnet, dass** die Klemmverbindung (21) aus Federklammern (22) besteht, die in Öffnungen (23) des Formteils (1) rastend eingreifen.

4. Schwellerelement nach den Ansprüchen 1, 2 oder 3, **dadurch gekennzeichnet, dass** an jeder Seitenwandung der durchgehenden Ausnehmung (10) im Formteil (1) eine eingangs bogenförmig verlaufende obere Führungsbahn (27) vorgesehen ist, welche einer gradlinig verlaufenden unteren Führungsbahn (25) gegenübersteht, die im hinteren Endbereich parallel verlaufend zum gradlinig verlaufenden hinteren Ende der eingangs bogenförmig verlaufenden Führungsbahn (27) ausgeführt ist.

5. Schwellerelement nach Anspruch 1, **dadurch gekennzeichnet, dass** ein vorderes Ende (12) des Formteils (1) unmittelbar anliegend am Fahrzeugschweller (2) angeordnet ist und das hintere Ende (13) vom Fahrzeugschweller (2) sich bogenförmig wegerstreckt.

6. Schwellerelement nach einem der vorhergehenden Ansprüche, **dadurch gekennzeichnet, dass** das Formelement (1) sowie der Deckel (6) aus einem harten Material besteht und von einer elastischen und weichen Schicht abgedeckt ist, die sich über die Kanten des Formelements (1) und des Deckels (6) hinweg zur Bildung von elastischen Lippen erstreckt.

## Claims

1. Door sill element having a moulded part (1) which can be connected to the door sill (2) of a vehicle body and which forms an external cover for the door sill (2) and has a continuous recess (10) for a vehicle jack spindle, with it being possible for the recess (10) to be closed off by means of a cover (6), **characterized in that** the moulded part (1) can be fastened to the vehicle door sill (2) by means of a bracket on the vehicle body, which bracket is composed of an elongate angled rail (3) with a plurality of latching regions (4, 5) which are arranged correspondingly to latching lugs (20), which engage behind, of the moulded part (1), and **in that** the cover (6) is detachably connected to the moulded part (1), which cover (6) can be inserted into and is held in position in the moulded part (1) by means of clamping connections (21) and guide tracks (25, 26) in the moulded part (1) and guide webs (24), which are arranged correspondingly to said guide tracks (25, 26), on the cover (6), in such a way that the outer surface (11) of the moulded part (1) forms, with the inserted cover (6), an aerodynamic air-guiding surface which is designed so as to be rounded in the outward direction in a vertical plane and in a horizontal plane.

2. Door sill element according to Claim 1, **characterized in that** the moulded part (1) can be inserted into the latching regions (4) on a longitudinally running limb (3a) of the angled rail (3) in the direction of the arrow (P), and can be latched into the further latching regions (5) of a vertically running limb (3b) of the angled rail (3) by means of a longitudinal movement - counter to the direction of travel (F) - in the direction of the arrow (P1), and the vertical limb (3b) is aligned - as viewed in the direction of travel (F) - towards the front end (12) of the moulded part (1).

3. Door sill element according to Claims 1 or 2, **characterized in that** the clamping connection (21) is composed of spring clips (22) which engage in a latching fashion into openings (23) of the moulded part (1).

4. Door sill element according to Claims 1, 2 or 3, **characterized in that** an upper guide track (27) which initially runs in a curved fashion is provided on each side wall of the continuous recess (10) in the moulded part (1), which upper guide track (27) is situated opposite a rectilinearly-running lower guide track (25) which is formed in the rear end region so as to run parallel to the rectilinearly-running rear end of the guide track (27) which initially runs in a curved fashion.

5. Door sill element according to Claim 1, **characterized in that** a front end (12) of the moulded part (1) is arranged so as to bear directly against the vehicle door sill (2) and the rear end (13) extends away from the vehicle door sill (2) in a curved manner.

6. Door sill element according to one of the preceding claims, **characterized in that** the moulded element (1) and the cover (6) are composed of a hard material and are covered by an elastic and soft layer which extends beyond the edges of the moulded element (1) and of the cover (6) so as to form elastic lips.

## Revendications

1. Elément de bas de marche comprenant une pièce moulée (1) pouvant être connectée au bas de marche (2) d'une carrosserie de véhicule, qui forme un recouvrement extérieur par rapport au bas de marche (2) et présente un évidement continu (10) pour une broche de levage de paroi, l'évidement (10) pouvant être fermé par un couvercle (6), **caractérisé en ce que** la partie moulée (1) peut être fixée sur le bas de marche (2) du véhicule par le biais d'un dispositif de fixation sur la carrosserie du véhicule, lequel se compose d'un rail coudé allongé (3) avec plusieurs zones d'encliquetage (4, 5), qui sont disposées de manière à correspondre à des ergots d'encliquetage (20) de la partie moulée (1), venant en prise par l'arrière, et **en ce que** le couvercle (6) est connecté de manière détachable à la partie moulée (1), ledit couvercle pouvant être inséré et maintenu en position dans la partie moulée (1) depuis l'extérieur par le biais de connexions par serrage (21) et de pistes de guidage (25, 26) dans la partie moulée (1) ainsi que de nervures de guidage (24) disposées de manière correspondante à celles-ci sur le couvercle (6), de telle sorte que la surface extérieure (11) de la partie moulée (1) forme avec le couvercle inséré (6) une surface de guidage d'air aérodynamique qui est réalisée de manière arrondie vers l'extérieur dans un plan vertical et dans un plan horizontal.

2. Elément de bas de marche selon la revendication 1, **caractérisé en ce que** la partie moulée (1) peut être insérée dans les régions d'encliquetage (4) sur une branche (3a) s'étendant longitudinalement du rail coudé (3) dans la direction de la flèche (P) , et peut être encliquetée par déplacement longitudinal dans la direction de la flèche (P1) - à l'encontre de la direction de conduite (F) - dans les autres régions d'encliquetage (5) d'une branche (3b) s'étendant verticalement du rail coudé (3) et la branche verticale (3b) - vue dans la direction de conduite (F) - étant orientée vers l'extrémité avant (12) de la partie moulée (1).

3. Elément de bas de marche selon les revendications 1 ou 2, **caractérisé en ce que** la connexion par serrage (21) se compose de pinces à ressort (22) qui viennent en prise par encliquetage dans des ouvertures (23) de la partie moulée (1).

4. Elément de bas de marche selon les revendications 1, 2 ou 3, **caractérisé en ce que** l'on prévoit sur chaque paroi latérale de l'évidement continu (10) dans la partie moulée (1) une piste de guidage (27) supérieure s'étendant initialement en forme d'arc, qui est en regard d'une piste de guidage (25) inférieure s'étendant en ligne droite, qui est réalisée dans la région d'extrémité arrière en s'étendant parallèlement à l'extrémité arrière en ligne droite de la piste de guidage (27) s'étendant initialement en forme d'arc.

5. Elément de bas de marche selon la revendication 1, **caractérisé en ce qu'**une extrémité avant (12) de la partie moulée (1) est disposée directement en appui contre le bas de marche (2) du véhicule, et l'extrémité arrière (13) du bas de marche (2) s'étend à l'écart en forme d'arc.

6. Elément de bas de marche selon l'une quelconque des revendications précédentes, **caractérisé en ce que** l'élément moulé (1) ainsi que le couvercle (6) se composent d'un matériau dur et sont recouverts par une couche élastique et souple, qui s'étend sur les arêtes de l'élément moulé (1) et du couvercle (6) pour former des lèvres élastiques.
